(19) Europäisches Patentamt
European Patent Office
Office européen des brevets

(11) EP 2 594 959 B1

(12) **EUROPEAN PATENT SPECIFICATION**

(45) Date of publication and mention
of the grant of the patent:
**04.01.2017 Bulletin 2017/01**

(51) Int Cl.:
**G01S 17/36** *(2006.01)* **G01S 17/87** *(2006.01)*

(21) Application number: **11189550.4**

(22) Date of filing: **17.11.2011**

(54) **System and method for multi TOF camera operation using phase hopping**

System und Verfahren für Mehrfach-TOF-Kamerabetrieb mit Phasensprung

Système et procédé pour le fonctionnement de caméra TOF multiple utilisant un saut de phase

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.05.2013 Bulletin 2013/21**

(73) Proprietor: **Heptagon Micro Optics Pte. Ltd.**
**Singapore 738317 (SG)**

(72) Inventors:
• **Oggier, Thierry**
**8049 Zurich (CH)**
• **Büttgen, Bernhard**
**8134 Adliswil (CH)**
• **Schweizer, Matthias**
**5600 Lenzburg (CH)**

(74) Representative: **Peterreins Schley**
**Patent- und Rechtsanwälte**
**Hermann-Sack-Strasse 3**
**80331 München (DE)**

(56) References cited:
**US-A1- 2005 190 206    US-A1- 2007 182 949**
**US-B1- 7 405 812**

• **BUTTGEN B ET AL: "Pseudonoise Optical Modulation for Real-Time 3-D Imaging With Minimum Interference", IEEE TRANSACTIONS ON CIRCUITS AND SYSTEMS I: REGULAR PAPERS, IEEE, US, vol. 54, no. 10, 1 October 2007 (2007-10-01), pages 2109-2119, XP011194105, ISSN: 1549-8328, DOI: 10.1109/TCSI.2007.904598**
• **REFAEL Z. WHYTE, ANDREW D. PAYNE, ADRIAN A. DORRINGTON* AND MICHAEL J. CREE: "Multiple range imaging camera operation with minimal performance impact", SPIE, PO BOX 10 BELLINGHAM WA 98227-0010, USA, 2010, XP040547532,**

**Description**

BACKGROUND OF THE INVENTION

Three dimensional (3D) time-of-flight (TOF) cameras are active-type optical depth measurement imaging systems. In general, TOF cameras are based on the phase-measurement technique of emitted intensity-modulated light, which is reflected by the scene. The reflected light is imaged onto a sensor comprising a two-dimensional array of pixels. The photo-generated electrons are synchronously demodulated in the sensor, and based on the phase information, the distance for each pixel is deduced. A more detailed description is presented in U.S. Pat. No. 7,884,310 , which is incorporated herein by this reference in its entirety.

A major problem of the state-of-the-art 3D TOF cameras is that cameras operating with the same modulation frequency interfere with each other. Different technologies are known to overcome this interference issue, however.

If more than one camera is operated, the cameras can be multiplexed in time (time-division multiplexing). In that case, the cameras a) need to be synchronized with one another and b) are slowed down in their individual frame rates.

Space-division multiplexing (SDMA) just separates the different cameras spatially, which is not an option for many applications.

Frequency multiplexing (FDMA) is another well-known method to avoid interference between cameras. Applying different modulation frequencies to the different cameras solves the problem of interference, but adds complexity in production and calibration and the cameras' resolution is different dependant on the applied modulation frequency.

The wavelength division multiplexing technique (WDMA) assigns a unique optical emission and detection wavelength to each camera. WDMA would restrict the number of cameras that can be used, however. It also increases challenges in manufacturing the different cameras.

Code division multiplexing (CDMA) is another common approach to avoid interference. By equally coding the emitted light and the receiver, the camera can unambiguously detect its own "light," and interference is generally reduced. However, practical implementation so far have shown that the power budget of cameras applying a CDMA modulation technique is always worse compared to the pure sine modulation. The theoretical derivation of a TOF camera using pseudo-noise modulation as well as the practical results have been presented in B. Buttgen et al, "Pseudo-noise Optical Modulation for Real-Time 3-D Imaging With Minimum Interference", IEEE transaction on circuits and systems, VOL. 55, NO. 6, July 2008.

All these possible modulation techniques and drawbacks are described in B. Buttgen, "Extending Time-of-Flight Optical 3D-Imaging to Extreme Operating Conditions", Ph.D. thesis, University of Neuchatel, 2006.

More recently, a method to reduce camera interferences was described in U.S. Pat. No. 7,405,812 . The method proposes to vary the frequency during the exposure (frequency hopping), add temporarily imperfections (waveform, periodicity), and include clock noise. All those propositions promise good multicamera operability but require either highly complex clocking circuitry or risk unstable behavior.

A paper by Whyte et al. entitled "Multiple range imaging camera with minimal performance impact" in 2010 discloses a time-of-flight range imaging cameras operating by illuminating a scene with amplitude modulated light and measuring the phase shift of the modulation envelope between the emitted and reflected light.

Published U.S. patent application no. US 2007/182949 A1 discloses an arrangement for measuring the distance to an object, comprising a photonic source for illuminating said object using a continuous modulated photonic wave, a solid-state image sensor, comprising an array of avalanche photodiodes and a plurality of circuits for processing signals output by said avalanche photodiodes to yield data depending on the photonic wave reflected by said object onto said photodiodes.

Published U.S. patent application no. US 2005/190206 A1 discloses a method for determining a pixel gray scale value image, particularly for a multi-dimensional image system.

SUMMARY OF THE INVENTION

The present invention relates to a time of flight imaging system as set out in claim 1 and a time of flight imaging method as set out in claim 7. Other embodiments are described in the dependent claims.

Typically each of the time of flight cameras comprises a sensor including a two dimensional array of demodulation pixels and a modulated light source. The pixels of the sensor sample the light from the modulated light source synchronously with the modulation of the modulated light source. Each of the time of flight cameras images the scene by integrating the subexposures into exposures of the scene.

BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention. Of the drawings:

Fig. 1 is a schematic diagram illustrating the operation of a time-of-flight (TOF) camera and its operation;

Fig. 2A is a plot of intensity as a function of time showing the emitted and received signals;

Fig 2B is a plot of intensity showing the demodulation of the received signal;

Fig 3 is a schematic diagram illustrated multi camera operation; and

Fig. 4 is a timing diagram showing the exposure and delays provided in each subexposure according to the present invention.

DETAILED DESCRIPTION OF THE PREFERRED EMBODIMENTS

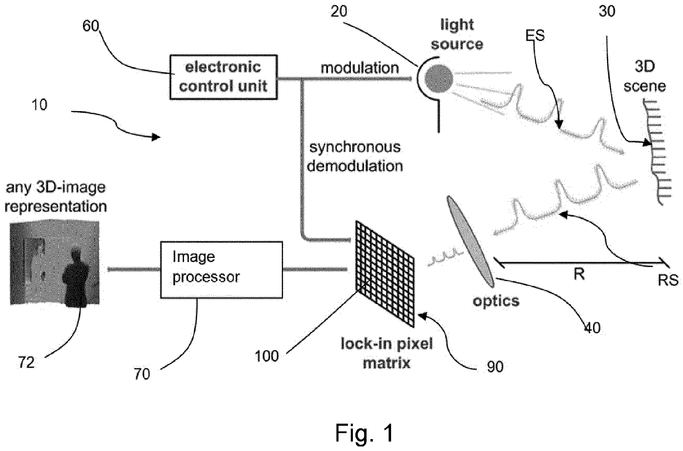

Fig. 1 illustrates the basic principle of a 3D-measurement camera system 10 based on a sensor 90 comprising the two-dimensional array of demodulation pixels 100.

Modulated illumination light ES emitted from an illumination module or light source 20 of the camera 10 is sent to the object 30 of a scene. A fraction of the total optical power sent out is reflected (see reference RS) and received back at the camera 10, through the optics 40 and detected by the 3D imaging sensor 90.

The sensor 90 comprises a two dimensional pixel matrix of the demodulation pixels 100. Each pixel 100 is capable of demodulating the impinging light signal RS. An electronics control unit 60 controls the timing of the illumination 20 and sensor 90. The phase values of all pixels 100 correspond to the particular distance information of the corresponding point in the scene. The two-dimension gray scale image with the distance information is converted into a three-dimensional image 72 by image processor 70. This can be displayed to a user via a display or used as a machine vision input.

The distance R for each pixel 100 is calculated by:

$$R = (c*TOF) / 2,$$

with c as light velocity and TOF corresponding to the time-of-flight. Intensity-modulated light is sent out by the illumination module or light source 20, reflected by the object 30 and detected by the sensor 90. With each pixel 100 of the sensor 90 being capable of demodulating the optical signal RS at the same time, the sensor 90 is able to deliver 3D images in real-time, i.e., frame rates of up to 30 Hertz (Hz), or even more, are possible. Continuous sine modulation delivers the phase delay (P) between the emitted signal ES and the received signal RS, which corresponds directly to the distance R:

$$R = (P*c) / (4*pi*fmod),$$

where fmod is the modulation frequency of the emitted optical signal ES. Typical state-of-the-art modulation frequencies range from a few MHz up to a few hundreds of MHz or even GHz.

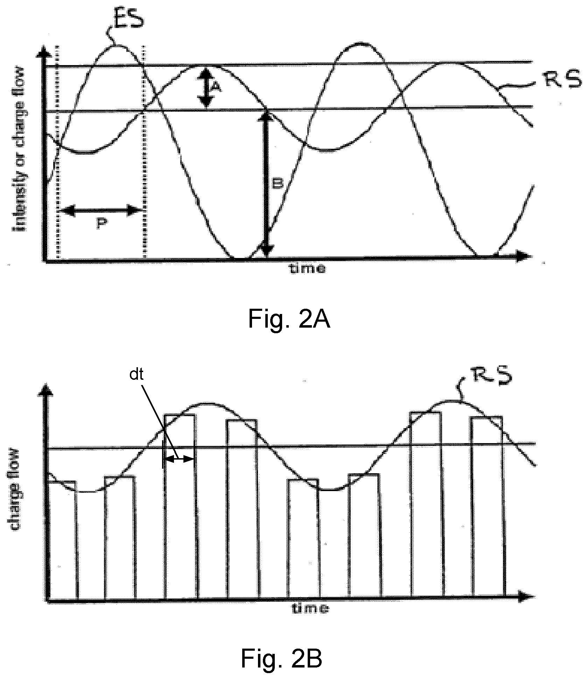

Figs. 2A and 2B show the relationship between signals for the case of continuous sinusoidal modulation and the signal sampling.

Fig. 2A shows both the modulated emitted illumination signal ES and received signal RS. The amplitude A, offset B of the received signal RS and phase P between both signals are unknown, but they can be unambiguously reconstructed with at least three samples of the received signal. B represents the received signal part due to background light.

In Fig. 2B shows a sampling with four samples per modulation period being depicted. Each sample is an integration of the electrical photo-signal in the integration gates or diffusion regions in each pixel 100 over a duration dt that is a predefined fraction of the modulation period. Typically, in demodulation pixels 100 with four integration sites, dt corresponds to a quarter of the period. In order to increase the signal to noise ratio of each sample the photo-generated charges may be accumulated over several - up to more than 1 million - modulation periods in the integration sites.

The electronic control unit 60, employing for example a field programmable gate array (FPGA), generates the signals for the synchronous channel activation in the demodulation stage.

Using these four samples, the three decisive modulation parameters amplitude A, offset B and phase shift P of the modulation signal can be extracted by the equations

$$A = \text{sqrt} [(A3 - A1)^2 + (A2 - A0)^2] / 2$$

$$B = [A0 + A1 + A2 + A3] / 4$$

$$P = \text{arctan} [(A3 - A1) / (A0 - A2)]$$

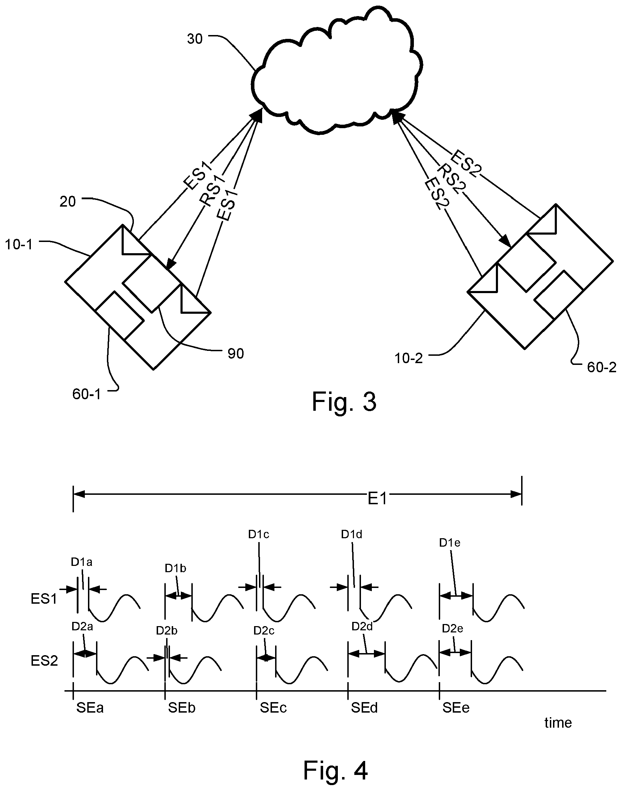

Fig. 3 illustrates the application of the present invention. Here two cameras 10-1, 10-2 observe the same object or scene 30. Each camera has its own illumination unit 20 and sensor 90 that are controlled by separate electronics control units 60-1, 60-2.

As illustrated in Fig. 4, each camera 10-1, 10-2 operates by subdividing its exposures E into several sub-exposures SEa-SEe. For each of the sub-exposures SEa-SEe, the phase of the illumination 20 and the sensor 90 is changed by electronics control units 60-1, 60-2. A common phase delay D1, D2 is added to the illumination module 20 and the sensor 90 for each of the sub-exposures in the emitted signals ES1, ES2 for each of the cameras 10-1, 10-2. These phase delays D1, D2 are different for the different cameras 10-1, 10-2, however.

Since for each camera its sensor 90 and the illumination unit 20 receive the same phase delay change, the phase delay between the illumination and the sensor is kept constant during the exposure for each camera. On the other hand, the phase delay is different between the cameras in each of the subexposures SE. Usually, the electronics control units 60-1, 60-2 each compute the phase change independently of each other and generate the corresponding signals for their respective illumination unit 20 and the sensor 90.

The phase change is preferably computed in a random or pseudo-random way and is different for each camera 10-1, 10-2. Moreover, the cameras 10-1, 10-2 will typically be unsynchronized as to their respective exposure and subexposure timing.

For the ease of implementation, a smaller set of possible phase delays might be applied, e.g. 0°, 90°, 180° and 270°, while the selection of the added phase delay is preferably random or pseudo-random.

Furthermore, to reduce impacts due to any camera mismatches, it is advantageous that a phase change of n° during a sub-exposure of duration t is followed by a sub-exposure with phase change of n°+180° with the same duration of t.

The sensors 90 preferably integrate over all sub-exposures SEa-SEe and only need to be read out after completing the full exposure.

To further reduce the probability of possible interference with other cameras, the duration of each sub-exposure might be varied in a random or pseudo-random way as well.

While this invention has been particularly shown and described with references to preferred embodiments thereof, it will be understood by those skilled in the art that various changes in form and details may be made therein without departing from the scope of the invention encompassed by the appended claims.

**Claims**

1. A time of flight imaging system comprising:

   multiple time of flight cameras (10-1, 10-2) imaging a scene,
   wherein each of the time of flight cameras (10-1, 10-2) comprises a sensor (90) including a two dimensional array of demodulation pixels and a modulated light source (20),
   wherein the pixels of the sensor (90) sample the light from the modulated light source (20) synchronously with the modulation of the modulated light source (20), **characterized in that** each camera (10-1, 10-2) operates by subdividing its exposures (E) into several subexposures (SEa-SEe), wherein for each of the subexposures (SEa-SEe) the phase of the illumination by the light source (20) and the sensor (90) is changed and wherein a common phase delay (D1, D2) is added to the light source (20) and the sensor (90) for each of the subexposures in emitted signals (ES1, ES2) for each of the cameras (10-1, 10-2), these phase delays (D1, D2) being different for the different cameras (10-1, 10-2).

2. A system as claimed in the preceding claim, wherein each of the time of flight cameras (10-1, 10-2) images the scene by integrating the subexposures (SEa-SEe) into exposures of the scene.

3. A system as claimed in any of the preceding claims, wherein each of the time of flight cameras (10-1, 10-2) changes the phase delay (D1, D2) applied to the subexposures.

4. A system as claimed in any of the preceding claims, wherein the time of flight cameras (10-1, 10-2) determine the phase delays (D1, D2) independently of each other.

5. A system as claimed in any of the preceding claims, wherein the time of flight cameras (10-1, 10-2) determine the phase delays (D1, D2) randomly or pseudo-randomly.

6. A system as claimed in any of the preceding claims, wherein the time of flight cameras (10-1, 10-2) change the phase delays (D1, D2) by approximately 180° to minimize effects of camera mismatch.

7. A time of flight imaging method comprising:

   imaging the same scene with multiple time of flight cameras (10-1, 10-2), wherein each time of flight camera (10-1, 10-2) includes a sensor (90) including a two dimensional array of demodulation pixels and an illumination unit (20) of a time of flight camera (10-1, 10-2), wherein the pixels of the sensor (90) sample the light from the modulated light source (20) synchronously with the modulation of the modulated light source (20);
   **characterized in that**:

   each camera (10-1, 10-2) operates by subdividing its exposures (E) into several subexposures (SEa-SEe); and by
   applying the same phase delay (D1, D2) to the sensor (90) and the illumination unit (20) of each time of flight camera (10-1, 10-2) for each of the subexposures in emitted signals (ES1, ES2), wherein these phase delays (D1, D2) are different for the different cameras (10-1, 10-2); and
   changing the phase delay (D1, D2) between subexposures (SEa-SEe).

8. A method as claimed in claim 7, wherein each of the time of flight cameras (10-1, 10-2) images the scene by integrating the subexposures into exposures of the scene.

9. A method as claimed in any of claims 7-8, wherein each of the time of flight cameras (10-1, 10-2) changes the phase delay (D1, D2) applied to the subexposures.

10. A method as claimed in any of claims 7-9, wherein the time of flight cameras (10-1, 10-2) determine the phase delays (D1, D2) independently of each other.

11. A method as claimed in any of claims 7-10, wherein the time of flight cameras (10-1, 10-2) determine the phase delays (D1, D2) randomly or pseudo-randomly.

12. A method as claimed in any of claims 7-11, wherein the time of flight cameras (10-1, 10-2) change the phase delays (D1, D2) by approximately 180° to minimize effects of camera mismatch.

**Patentansprüche**

1. Flugzeit-Bildgebungssystem, umfassend:

mehrere Flugzeitkameras (10-1, 10-2), die eine Szene abbilden,
wobei jede der Flugzeitkameras (10-1, 10-2) einen Sensor (90) mit einem zweidimensionalen Array aus Demodulationspixeln und einer modulierten Lichtquelle (20) umfasst,
wobei die Pixel des Sensors (90) das Licht von der modulierten Lichtquelle (20) synchron mit der Modulation der modulierten Lichtquelle (20) abtasten,
**dadurch gekennzeichnet, dass** jede Kamera (10-1, 10-2) durch Unterteilen ihrer Belichtungen (E) in mehrere Teilbelichtungen (SEa-SEe) arbeitet, wobei für jede der Teilbelichtungen (SEa-SEe) die Phase der Beleuchtung durch die Lichtquelle (20) und
den Sensor (90) geändert wird und wobei eine gemeinsame Phasenverzögerung (D1, D2) zu der Lichtquelle (20) und dem Sensor (90) für jede der Teilbelichtungen in emittierten Signalen (ES1, ES2) für jede der Kameras (10-1, 10-2) hinzugefügt wird,
wobei diese Phasenverzögerungen (D1, D2) für die verschiedenen Kameras (10-1, 10-2) verschieden sind.

2. System nach dem vorhergehenden Anspruch, wobei jede der Flugzeitkameras (10-1, 10-2) die Szene durch Integrieren der Teilbelichtungen (SEa-SEe) in Belichtungen der Szene abbildet.

3. System nach einem der vorhergehenden Ansprüche, wobei jede der Flugzeitkameras (10-1, 10-2) die auf die Teilbelichtungen angewendete Phasenverzögerung (D1, D2) ändert.

4. System nach einem der vorhergehenden Ansprüche, wobei die Flugzeitkameras (10-1, 10-2) die Phasenverzögerungen (D1, D2) unabhängig voneinander bestimmen.

5. System nach einem der vorhergehenden Ansprüche, wobei die Flugzeitkameras (10-1, 10-2) die Phasenverzögerungen (D1, D2) zufällig oder pseudozufällig bestimmen.

6. System nach einem der vorhergehenden Ansprüche, wobei die Flugzeitkameras (10-1, 10-2) die Phasenverzögerungen (D1, D2) um etwa 180° ändern, um Effekte einer Kamerafehlanpassung zu minimieren.

7. Flugzeug-Bildgebungsverfahren, umfassend:

Abbilden der gleichen Szene mit mehreren Flugzeitkameras (10-1, 10-2), wobei jede Flugzeitkamera (10-1, 10-2) einen Sensor (90) mit einem zweidimensionalen Array aus Demodulationspixeln und einer Beleuchtungseinheit (20) einer Flugzeitkamera (10-1, 10-2) enthält,
wobei die Pixel des Sensors (90) das Licht von der modulierten Lichtquelle (20) synchron mit der Modulation der modulierten Lichtquelle (20) abtasten,
**dadurch gekennzeichnet, dass**:

jede Kamera (10-1, 10-2) durch Unterteilen ihrer Belichtungen (E) in mehrere Teilbelichtungen (SEa-SEe) arbeitet; und durch Anwenden der gleichen Phasenverzögerung (D1, D2) auf den Sensor (90) und die Beleuchtungseinheit (20) jeder Flugzeitkamera (10-1, 10-2) für jede der Teilbelichtungen in emittierten Signalen (ES1, ES2), wobei diese Phasenverzögerungen (D1, D2) für die verschiedenen Kameras (10-1, 10-2) verschieden sind; und
Ändern der Phasenverzögerung (D1, D2) zwischen Teilbelichtungen (SEa-SEe).

8. Verfahren nach Anspruch 7, wobei jede der Flugzeitkameras (10-1, 10-2) die Szene durch Integrieren der Teilbelichtungen in Belichtungen der Szene abbildet.

**9.** Verfahren nach einem der Ansprüche 7-8, wobei jede der Flugzeitkameras (10-1, 10-2) die auf die Teilbelichtungen angewendete Phasenverzögerung (D1, D2) ändert.

**10.** Verfahren nach einem der Ansprüche 7-9, wobei die Flugzeitkameras (10-1, 10-2) die Phasenverzögerungen (D1, D2) unabhängig voneinander bestimmen.

**11.** Verfahren nach einem der Ansprüche 7-10, wobei die Flugzeitkameras (10-1, 10-2) die Phasenverzögerungen (D1, D2) zufällig oder pseudozufällig bestimmen.

**12.** Verfahren nach einem der Ansprüche 7-11, wobei die Flugzeitkameras (10-1, 10-2) die Phasenverzögerungen (D1, D2) um etwa 180° ändern, um Effekte einer Kamerafehlanpassung zu minimieren.

**Revendications**

**1.** Système d'imagerie à temps de vol comprenant :

de multiples caméras à temps de vol (10-1, 10-2) imageant une scène,
chacune des caméras à temps de vol (10-1, 10-2) comprenant un capteur (90) comportant une matrice bidimensionnelle de pixels de démodulation et une source de lumière modulée (20),
les pixels du capteur (90) échantillonnant la lumière provenant de la source de lumière modulée (20) de façon synchrone avec la modulation de la source de lumière modulée (20),
**caractérisé en ce que** chaque caméra (10-1, 10-2) fonctionne en subdivisant ses expositions (E) en plusieurs sous-expositions (SEa-SEe), dans lequel pour chacune des sous-expositions (SEa-SEe), la phase de l'éclairage par la source de lumière (20) et du capteur (90) est modifiée et dans lequel un retard de phase commun (D1, D2) est ajouté à la source de lumière (20) et au capteur (90) pour chacune des sous-expositions dans des signaux émis (ES1, ES2) pour chacune des caméras (10-1, 10-2), ces retards de phase (D1, D2) étant différents pour les différentes caméras (10-1, 10-2).

**2.** Système selon la revendication précédente, dans lequel chacune des caméras à temps de vol (10-1, 10-2) image la scène en intégrant les sous-expositions (SEa-SEe) en expositions de la scène.

**3.** Système selon l'une quelconque des revendications précédentes, dans lequel chacune des caméras à temps de vol (10-1, 10-2) modifie le retard de phase (D1, D2) appliqué aux sous-expositions.

**4.** Système selon l'une quelconque des revendications précédentes, dans lequel les caméras à temps de vol (10-1, 10-2) déterminent les retards de phase (D1, D2) indépendamment les unes des autres.

**5.** Système selon l'une quelconque des revendications précédentes, dans lequel les caméras à temps de vol (10-1, 10-2) déterminent les retards de phase (D1, D2) de façon aléatoire ou pseudo-aléatoire.

**6.** Système selon l'une quelconque des revendications précédentes, dans lequel les caméras à temps de vol (10-1, 10-2) modifient les retards de phase (D1, D2) d'environ 180° pour minimiser les effets de décalage de caméra.

**7.** Procédé d'imagerie à temps de vol comprenant :

l'imagerie de la même scène avec de multiples caméras à temps de vol (10-1, 10-2),
chaque caméra à temps de vol (10-1, 10-2) comportant un capteur (90) comportant une matrice bidimensionnelle de pixels de démodulation et une unité d'éclairage (20) d'une caméra à temps de vol (10-1, 10-2),
les pixels du capteur (90) échantillonnant la lumière provenant de la source de lumière modulée (20) de façon synchrone avec la modulation de la source de lumière modulée (20) ;
**caractérisé en ce que** :

chaque caméra (10-1, 10-2) fonctionne en subdivisant ses expositions (E) en plusieurs sous-expositions (SEa-SEe) ;
l'application du même retard de phase (D1, D2) au capteur (90) et à l'unité d'éclairage (20) de chaque caméra à temps de vol (10-1, 10-2) pour chacune des sous-expositions dans des signaux émis (ES1, ES2), ces retards de phase (D1, D2) étant différents pour les différentes caméras (10-1, 10-2) ; et
la modification du retard de phase (D1, D2) entre sous-expositions (SEa, SEe).

**8.** Procédé selon la revendication 7, dans lequel chacune des caméras à temps de vol (10-1, 10-2) image la scène en intégrant les sous-expositions en expositions de la scène.

**9.** Procédé selon l'une quelconque des revendications 7 et 8, dans lequel chacune des caméras à temps de vol (10-1, 10-2) modifie le retard de phase (D1, D2) appliqué aux sous-expositions.

**10.** Procédé selon l'une quelconque des revendications 7 à 9, dans lequel les caméras à temps de vol (10-1, 10-2) déterminent les retards de phase (D1, D2) indépendamment les unes des autres.

11. Procédé selon l'une quelconque des revendications 7 à 10, dans lequel les caméras à temps de vol (10-1, 10-2) déterminent les retards de phase (D1, D2) de façon aléatoire ou pseudo-aléatoire.

12. Procédé selon l'une quelconque des revendications 7 à 11, dans lequel les caméras à temps de vol (10-1, 10-2) modifient les retards de phase (D1, D2) d'environ 180° pour minimiser les effets de décalage de caméra.

Fig. 1

Fig. 2A

Fig. 2B

30

20

10-1

90

60-1

ES1

RS1

ES1

ES2

RS2

ES2

10-2

60-2

## Fig. 3

E1

D1a

D1b

D1c

D1d

D1e

ES1

D2a

D2b

D2c

D2d

D2e

ES2

SEa

SEb

SEc

SEd

SEe

time

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7884310 B
- US 7405812 B

- US 2007182949 A1
- US 2005190206 A1

**Non-patent literature cited in the description**

- **B. BUTTGEN et al.** Pseudo-noise Optical Modulation for Real-Time 3-D Imaging With Minimum Interference. *IEEE transaction on circuits and systems,* July 2008, vol. 55 (6

- Extending Time-of-Flight Optical 3D-Imaging to Extreme Operating Conditions. **B. BUTTGEN.** Ph.D. thesis. University of Neuchatel, 2006
- **WHYTE et al.** *Multiple range imaging camera with minimal performance impact,* 2010